(19)

Europäisches Patentamt
European Patent Office
Office européen des brevets

(11) **EP 1 968 235 A1**

(12) **EUROPEAN PATENT APPLICATION**

(43) Date of publication:
  **10.09.2008 Bulletin 2008/37**

(51) Int Cl.:
  ***H04L 12/24*** (2006.01)    ***H04L 12/26*** (2006.01)

(21) Application number: **07103512.5**

(22) Date of filing: **05.03.2007**

| | |
|---|---|
| (84) Designated Contracting States:<br>**AT BE BG CH CY CZ DE DK EE ES FI FR GB GR HU IE IS IT LI LT LU LV MC MT NL PL PT RO SE SI SK TR**<br>Designated Extension States:<br>**AL BA HR MK RS** | (72) Inventor: **Barrett, Paul**<br>**IPSWICH, Suffolk IP5 3SN (GB)**<br><br>(74) Representative: **Simons, Alison et al**<br>**Dummett Copp**<br>**25 The Square**<br>**Martlesham Heath**<br>**Ipswich,**<br>**Suffolk, IP5 3SL (GB)** |
| (71) Applicant: **Psytechnics Ltd**<br>**Ipswich,**<br>**Suffolk IP1 1HN (GB)** | |

(54) **Method of data analysis in a packet switched network**

(57)    This invention relates to an apparatus and method for analysis of packet media streams. In particular for analysis of media streams from different network monitoring points where it is desirable to compare analysis of a particular media packet stream from different monitoring points in the network. The invention provides a method for generating a report relating to a stream of packets in a packet switched network from a monitoring point in said network, comprising the step of: generating a signature from a plurality of packets in said stream; and in which said report includes said signature.

Fig. 2

**Description**

BACKGROUND

a. Field of the Invention

This invention relates to an apparatus and method for analysis of packet media streams. In particular for analysis of media streams from different network monitoring points where it is desirable to compare analysis of a particular media packet stream from different monitoring points in the network.

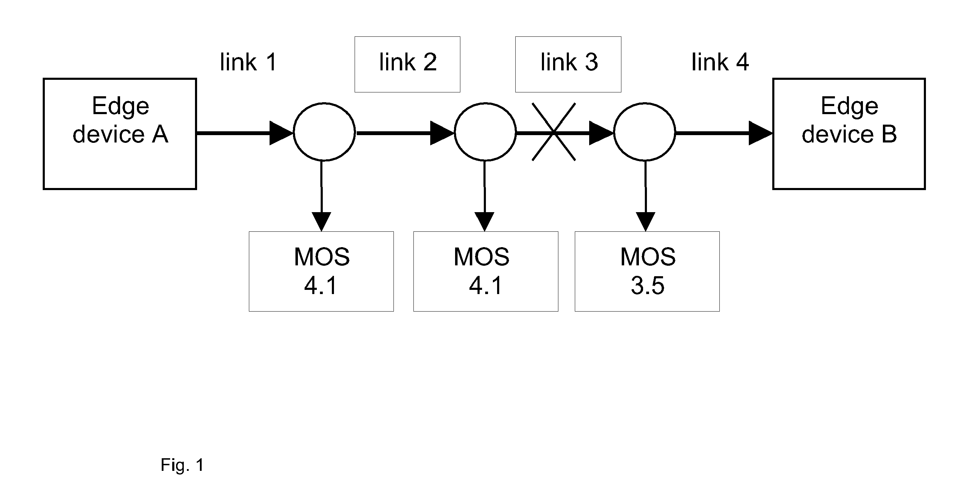

One application of this type of analysis involves comparing measurements from multiple points in a network to identify faulty links. For example, Figure 1 shows how a faulty link in a Voice over IP (VoIP) network can be identified by making multiple voice quality measurements along the connection (mean opinion score, or MOS, indicates the voice quality on a scale from 1: bad to 5: excellent). One problem raised by this kind of analysis is how to identify reports from the same call or stream, since each monitoring point may be producing many hundreds or even thousands of reports every second. If the media stream is carried over an Internet Protocol (IP) link using either the User Datagram Protocol (UDP) or Transmission Control Protocol (TCP), then a combination of the source and destination IP addresses and source and destination ports which are present in a header portion of a packet can be used to identify a given stream. However, if the connection is routed through multiple interconnected networks these values may be different in different networks.

An example of this situation is where Network Address Translation (NAT) routers, are used to allow many computers to share a small number of public IP addresses. One the private side of the NAT router, every computer has a unique address, typically in the 192.168.x.x IP address range, and these addresses are used to route packets between these computers; however this address range has no meaning outside the private network, and the source IP address of any packets destined for the outside world must be translated by the NAT router before being forwarded to any devices on the public network. Similarly packets from the public network that are destined for a computer on the private network will use the public address of the NAT router in the public network; once they reach the NAT router, the destination address will be translated to 192.168.x.x address of the target computer. NAT routers may also translate port numbers so that multiple computers on the private network can communicate with a single computer on the external network.

In a VoIP connection made between two private networks connected to the Internet via NAT routers, packets will undergo two stages of address and port translation in their journey from one edge device to the other. Hence, in order to correlate reports from the three different networks, a central analysis point would not only require knowledge of the network topology, but also knowledge of the translations being performed by each NAT router. In some systems this information may be available to other network elements, such as a VoIP call manager, but report correlation would require complex interactions between the central data collection point and other system elements.

b. Related Art

European Patent Application EP 0786 883 proposes a method and apparatus for making quality of service measurements on a connection across a network. However, this method requires external network/routing/configuration information to tell the probes which call to look for. Furthermore, packet loss results in lost report data.

The invention solves the problem of identifying which stream a packet is associated with, without the need for routing information, by generating a signature for each media stream that can be generated at multiple monitoring points. This signature can then be used to correlate reports from the same stream without recourse to external knowledge of the routing applied to the stream. Since packet networks are subject to packet loss, the signature is robust to packet loss, and in the preferred embodiment the invention works when the payload of the media packets are subject to end-to-end encryption, for example using the Secure Realtime Transport Protocol (SRTP).

In the case of systems that use the Realtime Transport Protocol (RTP), the synchronisation source (SSRC) header field could theoretically be to used identify a stream at multiple points because according to IETF RFC 3550 it should be selected randomly for each new stream. However, in practice some end-point implementations do not change the SSRC from call to call, thus making this an unreliable mechanism.

SUMMARY OF THE INVENTION

In summary, the invention applies to a packet switched network where data or media streams may be analysed by multiple monitoring points. For any given stream:

Every monitoring point generates a packet identifier for each of a subset of packets in the stream such that the same identifier will be generated from the same packet at every monitoring point.

Every monitoring point generates packet identifier sequence such that the same sequence, or a substantially overlapping sequence, is generated at all monitoring points and such that the identifiers in the sequence match packet identifiers of subsequently expected packets. The identifier value for every packet received by a monitor point is checked to see if it is in the packet identifier sequence. If it is, then a signature portion is calculated from the contents of the packet such that the probability of two random packets producing the same signature portion is small, e.g. less than 0.01.

Each monitor point sends an analysis report to a central data aggregation point. The report includes a signature calculated from the signature portions calculated from the contents of the packets matching the packet identifier sequence; if one or more of the identifiers in the packet identifier sequence has not been matched to a packet, a default signature value shall be used for the missing signature portions.

At the central data aggregation point, signatures are used to collate measurements made from the same stream at multiple monitoring points. When comparing two signatures, only those portions that have non-default values in both corresponding portions are used. Since there will be a finite probability that two or more streams could produce the same signature list, additional matching parameters such as the start and end time of the stream can be used to reduce the probability of false matches.

According to the invention there is provided a method for generating a report relating to a stream of packets in a packet switched network from a monitoring point in said network, comprising the step of: generating a signature from a plurality of packets in said stream; and in which said report includes said signature.

Preferably the signature comprises a sequence of signature portions each portion relating to an associated one of said plurality of packets and each signature portion may comprise a checksum relating to a plurality of bits in said associated packet.

In one embodiment said plurality of packets are selected in dependence upon an identifier associated with said packet.

Preferably a sequence of packet identifiers are generated at said monitoring point and said plurality of packets comprises a set of packets, each packet having a packet identifier contained in said sequence of packet identifiers, in which case a default signature portion may be used in the event that no packet is received having a particular identifier is said sequence of packet identifiers. The identifier may be a sequence number relating to the sequential position of a packet within said stream.

In a preferred embodiment a sequence of N packet identifiers are generated by a monitoring point upon receipt of a first packet in a stream having a sequence number equal to S according to the equation

$$U_i = D*FLOOR((S/D)+1) + D*i; \qquad\qquad i = 0 \ldots N-1$$

where FLOOR(x) is a function that returns the largest integer value that is less than or equal to x.

In another embodiment the sequence of packet identifiers comprises a sequence of N identifiers which are equal to a constant value.

Preferably the report further comprises a sequence of time to live values for each of said plurality of packets

The invention also extends to a method of collating reports generated as described above.

The method preferably comprises the step of comparing a first report having a first signature with a second report having a second signature by comparing said first signature with said second signature; and in the event of a match said reports are deemed to originate from the same packet stream as one another.

In a preferred embodiment said comparing step comprises the sub step of comparing only those corresponding portions of the first and second signature that are not equal to a default value and preferably portions of the first signature are compared with offset portions of the second signature.

The report may further comprise a sequence of time to live values for each of said plurality of packets, and in which said time to live values are used to determine the order in which the packets passed through the monitoring points.

Preferably the comparing step is not performed in the event that the report did not arrive within a predetermined time frame.

BRIEF DESCRIPTION OF THE DRAWINGS

The invention will now be described, with reference to the accompanying drawings, in which,

Figure 1 illustrates a packet switched network having several links and several monitoring points;
Figure 2 is a flow chart illustrating the generation of a signature for a particular media stream;
Figure 3 illustrates a relationship between a first received packet identifier and the first element of the packet identifier list; and

Figure 4 is a flow chart illustrating the comparison of received signatures to determine whether reports are from corresponding media streams.

DETAILED DESCRIPTION

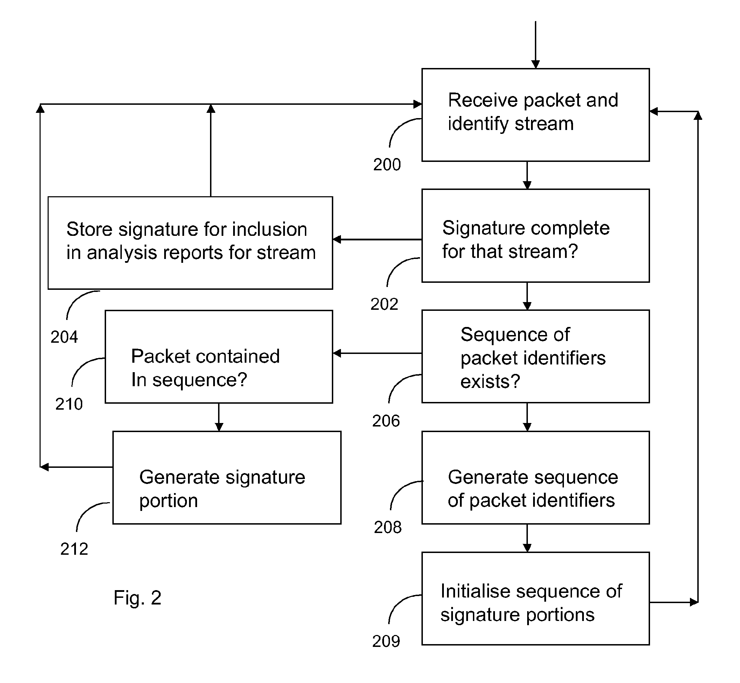

Referring to Figure 2, a signature for a particular media stream is generated will be described. Packets in a media stream generally contain a header portion which identifies a source and destination (which may be translated as the packet is routed through the network as described above) and a payload which contains the data, and which may or may not be encrypted.

At step 200 a packet is received and a packet stream to which it belongs is identified. This can be achieved by maintaining a table at the monitoring point that stores the local address and port numbers for the streams in progress. At step 202 the received packet is checked to see whether a signature has already been generated for the stream to which the packet belongs. If so then no further steps are required, and the signature can be included in any analysis reports relating to the packet stream.

If a signature has not yet been generated then at step 206, it is checked whether a sequence of packet identifiers has yet been generated. If not then at step 208 a sequence of packet identifiers is generated as follows:

The sequence of packet identifiers comprises N equally spaced identifier values $U = \{U_0, U_1, ..., U_{N-1}\}$, such that:

$$U_i = D*FLOOR((S/D)+1) + D*i; \qquad i = 0 ... N-1 \quad \text{(Equation 1)}$$

where $S_0$ is the identifier of the first packet in the stream seen by the monitoring point, D is the sequential spacing between the packets identified by the packet identifier sequence. FLOOR(x) returns the largest integer value that is less than or equal to x. Equation 1 has the result that $U_0$ will be the next sequence number $S_i$ that meets the following criterion:

$$S_i \text{ MODULO } D = 0; \qquad\qquad\qquad \text{(Equation 2)}$$

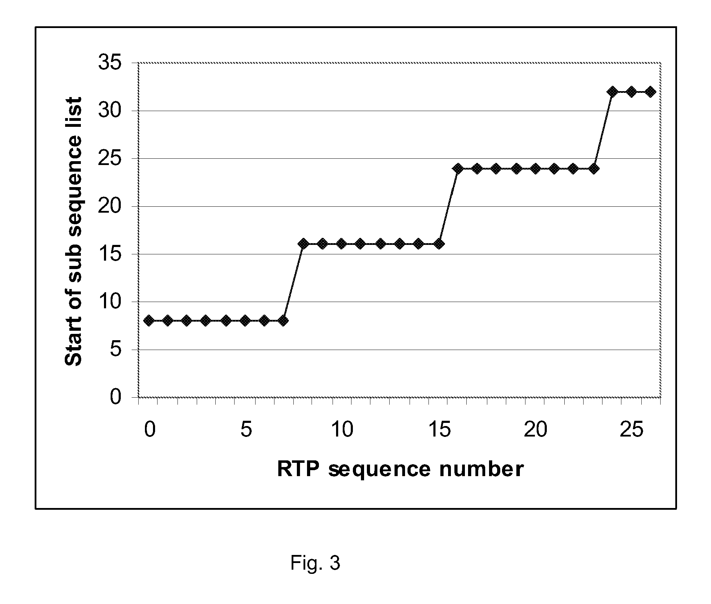

Figure 3 shows the relationship between the sequence number of the first packet seen by a monitoring point, $S_0$, and the first value in the sub-sequence list, $U_0$.

Referring back to Figure 2, at step 209 a sequence of signature portions is initialised such that they are all equal to a default value.

The value of D determines the resilience of the invention to bursts of packet loss. The exact value of D is not critical, but in the preferred embodiment it is chosen so that the expected time of arrival of packets adjacent in the packet identifier sequence is in the order of one or two seconds. The monitoring point can use its knowledge of the type of media stream to select an appropriate value for D. For example, if the media stream is a VoIP connection, a good choice for D would be 50 because packets will typically be transmitted between 20 and 100 times a second.

If a sequence of packet identifiers already exists at step 206, then at step 210 the identifier of the received packet is compared to the list of packet identifiers and if the identifier is contained in the list, then a signature portion based on the contents of the packet is generated at step 212.

In the preferred embodiment the signature portion comprises a checksum relating to a plurality of bits within said packet. For example, the checksum is calculated over either the entire payload or the first 40 bytes of the payload, whichever is the smaller. Suitable checksums such as Cyclic Redundancy Checks (CRCs) are well-known in the art. Checksums which are used by some protocols and may be already contained in the header portions are not generally suitable because their calculation may include address and port values which may be modified by NAT routers.

Once the received packet identifier is greater than the greatest packet identifier in the packet identifier sequence the signature is complete for that stream.

If there have been any lost packets which should have formed a portion of the signature, then the checksum for that portion will remain at the default value.

If at step 212 the signature portion co-incidentally equals the default value then that portion is set to another predetermined value so that it is still considered later when comparing signatures from more than one monitoring point.

In the preferred embodiment, the number of identifier values in the packet identifiers sequence is eight and the number of bits in the checksum comprising a signature portion is eight. Hence each signature will comprise 64 signature bits if no packets are lost, and even if half the packets are lost, each signature list will still comprise 32 useful bits.

A potential problem arises if $S_0$ is close to $U_0$ and the first few packets of a stream are lost between two monitoring points because the values of $U_0$ calculated by the two monitoring points may be different. However, so long as the number of lost packets is less than D, the second list will start with the $U_1$ value in the first list, i.e. the two lists will substantially overlap. For example, let D=8. If the sequence number of the first packet in a sequence is 7 and a first monitoring point sees the sequence without packet loss, then the list calculated at this monitoring point will be $U_1$={ 8, 16, 24, 32, 40, ... }. If the first packet is lost before the second monitoring point, then the list calculated at the second monitoring point will be $U_2$={ 16, 24, 32, 40, 48, ... }. The problem of matching overlapping lists is addressed below.

Most media transport protocols, such as the Realtime Transport Protocol (RTP), MPEG Transport Stream (MPEG-TS), and the proprietary Real Data Protocol (RDT) all contain sequence numbers that can be used as the packet identifier.

The use of independent signatures from each packet in the packet identifier sequence makes the invention robust in the presence of packet loss. Since packet loss often occurs in bursts, the identifiers in the packet identifier sequence should be chosen so that the expected arrival times of the identified packets are spaced apart in time.

In order for the invention to work successfully, the signature must vary from stream-to-stream. The media transport protocol header may include information that is likely to vary from stream to stream for a given packet position - for example the RTP time stamp value for a packet which should be initialised to a random value according to IETF RFC 3550. It is therefore recommended that some parts of the media transport protocol header are included in the checksum calculation. Thus, even if the payload of two streams are identical, which could occur in the presence of digital silence for example, there is a high probability that the media transport protocol header will produce different checksums. Clearly any parts of the header that might be changed by a router must not be included in the checksum calculation. The complexity of the invention can be controlled by limiting the checksum calculation to a subset of the packet payload. It is actually advantageous if the payload of the packet is encrypted as it will have very high entropy, which in turn will increase the entropy of the signature.

In a second embodiment, the media data is carried using the MPEG-TS media transport protocol. In this case, the sequence number for each frame of media data is only 4 bits. Hence the packet identifier list is defined such that it matches the first N expected packets with a particular sequence number value, e.g. 0. The progression of the sequence number can be used to detect if a packet in the list has been lost and hence a default signature portion should be used. It should also be noted that media data frames may span more than one packet, in which case only those packets containing the MPEG-TS sequence number will be considered for the checksum calculation.

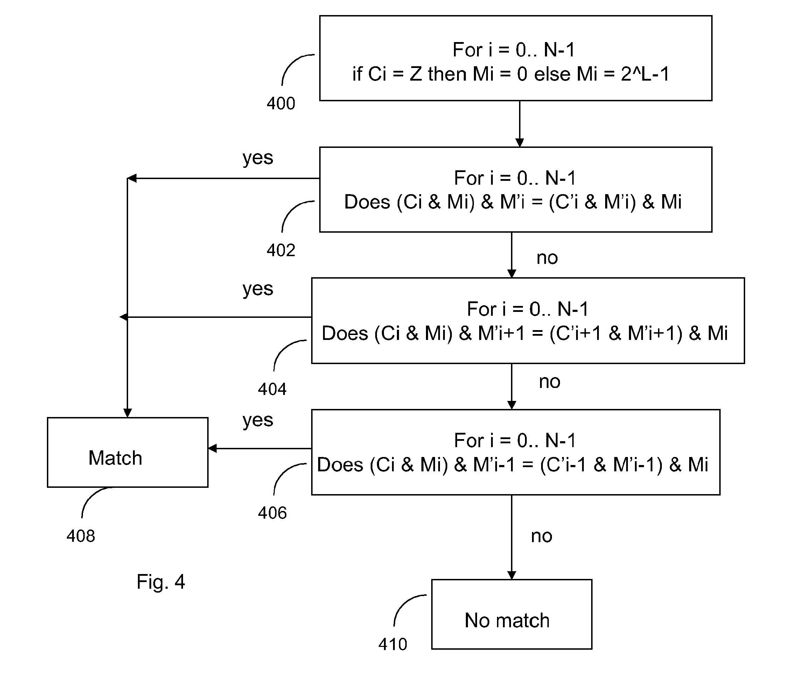

A report containing the signature together with analysis data is sent to a central data aggregation point where it is stored in a database. In a typical scenario, a user of a network management system will have selected a report made by a particular monitoring point for a particular stream, and will wish to identify all other reports that were made on the same stream by different monitoring points. This can be achieved by searching the database for reports with matching signature lists. In the preferred embodiment, the check to determine if two signature lists are from the same stream is performed as will now be described with reference to Figure 4.

Let the signature for a first stream comprise a sequence of signature portions $\mathbf{C} = \{C_0, C_1, ..., C_{N-1}\}$. For each signature, a mask sequence $\mathbf{M}$ is constructed at step 400 such that:

if $C_i$ = the default value Z then $M_i = 0$ else $M_i = 2^L-1$ where L is the number of bits in each signature portion

A pair of signatures $\mathbf{C} = \{C_0, C_1, ..., C_{N-1}\}$ and $\mathbf{C'} = \{C'_0, C'_1, ..., C'_{N-1}\}$ are deemed to match if a test carried out at step 402 is true for all N elements of the two lists:

$$(C_i \,\&\, M_i) \,\&\, M'_i = (C'_i \,\&\, M'_i) \,\&\, M_i \qquad ; i = 0 \ldots N\text{-}1$$

where & denotes a bit-wise AND operation.

This effectively restricts the comparison of $\mathbf{C}$ and $\mathbf{C'}$ to those signature portions where both values have non-default values. In order to speed up the search process, a sequence corresponding to ($\mathbf{C} \,\&\, \mathbf{M}$) list can be pre-calculated and stored with each signature in the database.

As discussed above, in some cases the signature lists may become offset due to packet loss between monitoring points at the start of the stream. The test is therefore repeated at steps 404 and 406 using a forward and backward offset, resulting in two further tests:

$$(C_i \,\&\, M_i) \,\&\, M'_{i+1} = (C'_{i+1} \,\&\, M'_{i+1}) \,\&\, M_i \qquad ; i = 1 \ldots N\text{-}2$$

$$(C_i \ \& \ M_i) \ \& \ M'_{i-1} = (C'_{i-1} \ \& \ M'_{i-1}) \ \& \ M_i \qquad ; i = 1 \dots N-2$$

Thus two reports are deemed to match at step 408 - ie they relate to the same stream - if any one of the tests is passed at steps 412,404 or 406. Although this mechanism increases the probability of a false match, this can be compensated for by increasing the number of packets in a packet identifier sequence or the number of bits in a signature portion.

If none of the three tests is passed (ie TRUE) then the reports do not match at step 410 - ie the reports do not relate to the same stream as each other.

The following is an example matching two signatures:

Consider two signature lists where L=8, N=8 and the default checksum value is Z=0. In the first signature the third and seventh packets were lost; in the second sequence, the third, seventh and eight packets were lost.

```
C ={ 0x45, 0x23, 0x00, 0x7f, 0x12, 0x76, 0x00, 0xef }
```

and

```
C'={ 0x45, 0x23, 0x00, 0x7f, 0x12, 0x76, 0x00, 0x00 }
```

then:

```
M ={ 0xff, 0xff, 0x00, 0xff, 0xff, 0xff, 0x00, 0xff }
```

and

```
M'={ 0xff, 0xff, 0x00, 0xff, 0xff, 0xff, 0x00, 0x00 }
```

The Boolean results of the test at step 402 are as follows for each element:

{ true, true, true, true, true, true, true, true }

Hence the two signatures match.

The probability of false matches may be reduced by restricting the search to reports which refer to streams that have ended within +/- 10 seconds of the target report which is to be matched.

It will be apparent to those skilled in the art that it is not necessary to wait for the end of stream to use the signature list: once a packet with an identifier which corresponds to an expected arrival time a few seconds later than that of $U_{N-1}$ has been received by the monitoring point, it is reasonable to assume that the signature list is complete, and can be used to label any reports that might be sent in relation to that stream. In some cases, a monitoring point may produce reports before the stream has ended. Such mid-stream reports from the same stream and monitoring point will typically be tied together by a unique stream identifier in the central data aggregation point. Once the reports containing the signature list have been received, it will be possible to use a combination of the signature list and the unique stream identifier to associate mid-stream reports from different monitoring points.

It will also be apparent that the expected packets in the packet identifier sequence, do not need to be equally spaced in time, and that the only requirement is that the same, or a substantially overlapping, lists be generated at each monitoring point.

The method may be enhanced by forming a time to live sequence comprising the value of the Time To Live (TTL) IP header field for every packet identified by the packet identifier sequence. The TTL field is an 8 bit value that is set when an IP packet is first transmitted, and which is decremented by each routing stage in the network. The order in which two reports were generated from the same stream can therefore be determined by examining any element of the time to live sequence that is present in both reports; the report with the higher TTL value will be earlier in the connection. Note that if two reports are matched at step 404 or 406, then the corresponding time to live sequences should be aligned accordingly prior to comparison.

It will be understood by those skilled in the art that the methods described above may be implemented on a conventional programmable computer, and that a computer program encoding instructions for controlling the programmable computer to perform the above methods may be provided on a computer readable medium.

**Claims**

1. A method for generating a report relating to a stream of packets in a packet switched network from a monitoring point in said network, comprising the step of:

   generating a signature from a plurality of packets in said stream; and in which said report includes said signature.

2. A method according to claim 1, in which the signature comprises a sequence of signature portions each portion relating to an associated one of said plurality of packets.

3. A method according to claim 2, in which each signature portion comprises a checksum relating to a plurality of bits in said associated packet.

4. A method according to any one of the preceding claims, in which said plurality of packets are selected in dependence upon an identifier associated with said packet.

5. A method according to any one of the preceding claims, in which a sequence of packet identifiers are generated at said monitoring point and said plurality of packets comprises a set of packets, each packet having a packet identifier contained in said sequence of packet identifiers.

6. A method according to claim 5, in which a default signature portion is used in the event that no packet is received having a particular identifier is said sequence of packet identifiers

7. A method according to claim 5 or claim 6, in which said identifier is a sequence number relating to the sequential position of a packet within said stream.

8. A method according to any one of claims 5 to 7, in which a sequence of N packet identifiers are generated by a monitoring point upon receipt of a first packet in a stream having a sequence number equal to S according to the equation

$$U_i = D*FLOOR((S/D)+1) + D*i; \qquad\qquad i = 0 \ldots N-1$$

where FLOOR(x) is a function that returns the largest integer value that is less than or equal to x.

9. A method according to any one of claims 5 to 7 in which the sequence of packet identifiers comprises a sequence of N identifiers which are equal to a constant value.

10. A method according to any one of the preceding claims, in which the report further comprises a sequence of time to live values for each of said plurality of packets

11. A method of collating reports generated by a plurality of monitoring points from a particular packet stream, in which each report contains a signature generated according to any one of the preceding claims.

12. A method according to claim 11, comprising the step of comparing a first report having a first signature with a second report having a second signature by comparing said first signature with said second signature; and in the event of a match said reports are deemed to originate from the same packet stream as one another.

13. A method according to claim 12, in which said comparing step comprises the sub step of comparing only those corresponding portions of the first and second signature that are not equal to a default value.

14. A method according to claim 12 or 13, in which portions of the first signature are compared with offset portions of the second signature.

15. A method according to any one of claims 11 to 14, in which the report further comprises a sequence of time to live values for each of said plurality of packets, and in which said time to live values are used to determine the order in which the packets passed through the monitoring points.

16. A method according to any one of claims 11 to 14, in which the comparing step is not performed in the event that the report did not arrive within a predetermined time frame.

17. A computer readable medium carrying a computer program for implementing the method according to any one of claims claim 1 to 16.

18. A computer program for implementing the method according any one of claims claim 1 to 16.

link 1    link 2    link 3    link 4

Edge device A

MOS 4.1    MOS 4.1    MOS 3.5

Edge device B

Fig. 1

EP 1 968 235 A1

Receive packet and identify stream

200

Signature complete for that stream?

202

Store signature for inclusion in analysis reports for stream

204

Sequence of packet identifiers exists?

206

Packet contained In sequence?

210

Generate sequence of packet identifiers

208

Generate signature portion

212

Initialise sequence of signature portions

209

Fig. 2

EP 1 968 235 A1

Fig. 3

**400**

For $i = 0 .. N-1$
if $C_i = Z$ then $M_i = 0$ else $M_i = 2^L-1$

no

**402**

For $i = 0 .. N-1$
Does $(C_i \& M_i) \& M'_i = (C'_i \& M'_i) \& M_i$

yes

no

**404**

For $i = 0 .. N-1$
Does $(C_i \& M_i) \& M'_{i+1} = (C'_{i+1} \& M'_{i+1}) \& M_i$

yes

no

**406**

For $i = 0 .. N-1$
Does $(C_i \& M_i) \& M'_{i-1} = (C'_{i-1} \& M'_{i-1}) \& M_i$

yes

no

**410**

No match

**408**

Match

Fig. 4

12

**EP 1 968 235 A1**

## EUROPEAN SEARCH REPORT

European Patent
Office

Application Number

EP 07 10 3512

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2003/046388 A1 (MILLIKEN WALTER CLARK [US]) 6 March 2003 (2003-03-06)<br>* abstract *<br>* paragraphs [0008] - [0030], [0040], [0041]; claims; figure 1.9 * | 1-7<br><br>8-18 | INV.<br>H04L12/24<br>H04L12/26 |
| Y | US 6 651 099 B1 (DIETZ RUSSELL S [US] ET AL) 18 November 2003 (2003-11-18)<br>* abstract *<br>* column 1, line 45 - line 65 *<br>* column 4, line 40 - column 5, line 9 *<br>* column 8, line 55 - column 11, line 40 *<br>* column 12, line 65 - column 14, line 48; figure 3 * | 1-7 | |
| Y | US 2004/103211 A1 (JACKSON ERIC S [US] ET AL) 27 May 2004 (2004-05-27)<br>* abstract *<br>* paragraphs [0019], [0020], [0088], [0089], [0099], [0107], [0108] * | 1-7 | |
| A | WON Y J ET AL: "A Hybrid Approach for Accurate Application Traffic Identification"<br>END-TO-END MONITORING TECHNIQUES AND SERVICES, 2006 4TH IEEE/IFIP WORK SHOP ON VANCOUVER, CANADA 03-03 APRIL 2006, PISCATAWAY, NJ, USA,IEEE,<br>3 April 2006 (2006-04-03), pages 1-8, XP010926696<br>ISBN: 978-1-4244-0145-1<br>* abstract * | 1,2 | TECHNICAL FIELDS SEARCHED (IPC)<br><br>H04L |

The present search report has been drawn up for all claims

| Place of search | Date of completion of the search | Examiner |
|---|---|---|
| Munich | 19 May 2008 | Ceccarini, Giulio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 07 10 3512

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2008

| Patent document cited in search report | | Publication date | Patent family member(s) | | Publication date |
|---|---|---|---|---|---|
| US 2003046388 | A1 | 06-03-2003 | NONE | | |
| US 6651099 | B1 | 18-11-2003 | US | 2004083299 A1 | 29-04-2004 |
| US 2004103211 | A1 | 27-05-2004 | AU | 2003295755 A1 | 18-06-2004 |
| | | | GB | 2411315 A | 24-08-2005 |
| | | | WO | 2004049627 A2 | 10-06-2004 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0786883 A